# EUROPEAN PATENT APPLICATION

(11) **EP 3 829 268 A1**
(43) Date of publication of application: **02.06.2021**
(21) Application number: 19824455.0
(22) Date of filing: 27.06.2019
(51) Int. Cl.: H05B 45/00

(54) **IOT LIGHT SWITCH MODULE FOR SMART HOME CONSTRUCTION**

(30) Priority: 29.06.2018 KR 20180075199
(71) Applicant: Dawon DNS Co., Ltd, Gwangmyeong-si, Gyeonggi-do 14322 (KR)
(72) Inventor: YEO, Un Nam, Uiwang-si, Gyeonggi-do 16003 (KR)
(74) Representative: Kurig, Thomas
(86) International application number: PCT/KR2019/007783
(87) International publication number: WO 2020/004963

(57) **Abstract**

Provided is an IoT light switch module for smart home construction. The IoT light switch module is connected between (i) an active line and (ii) another power terminal of lighting of which one power terminal is connected to a neutral line, and includes a relay switch connected between the active line and the another power terminal of the lighting, a controller configured to wirelessly communicate with a user device and control on and off of the relay switch according to a control command from the user device, a first regulator connected between the active line and a power input terminal of the controller, an AC-DC converter connected between the another power terminal of the lighting and the power input terminal of the controller, a super capacitor connected to the active line and connected to a power output terminal of the AC-DC converter, and a capacitor switch connected between the super capacitor and the power input terminal of the controller.

## Description

### TECHNICAL FIELD

The present disclosure relates to an IoT (Internet of Things) light switch module for smart home construction.

### BACKGROUND ART

The Internet of Things (IoT) refers to technology that enables information between people and things, and between things and things to communicate with each other based on the Internet. Sensors and communication modules are embedded in various things to connect to the Internet. The IoT allows things connected to the Internet to exchange mutual information and provide users with information they have analyzed and learned by themselves, or allows users to remotely control things through the Internet.

With the development of such IoT technology, smart home construction is becoming a reality. The smart home refers to technology configured in a way such that all devices in the house, including home appliances such as TVs, air conditioners, refrigerators, energy consuming devices such as water, electricity, lighting, heating and cooling, and security devices such as door locks and CCTV, are connected to the Internet so that users can remotely monitor and control them. In particular, lighting and heating and cooling are the fields where smart home construction is being realized at the fastest speed.

In the case of the lighting field, products having names and shapes such as the lighting device itself, a smart switch or a smart lighting socket are being distributed. For smooth remote monitoring and control, the products should always be supplied with power regardless of the on/off state of the lighting. The products are addressing the power failure by directly connecting a neutral line to receive power at all times, by embedding a large-capacity battery, or by replacing the battery. However, most homes before smart home construction do not have a neutral line that can be connected to the products in the wall or ceiling in the first place, so there is an inconvenience that separate wiring work is required to supply power at all times. In addition, the built-in battery or battery replacement method increases the weight and volume of a product, which is an obstacle to weight reduction and miniaturization.

### DISCLOSURE OF INVENTION

### TECHNICAL PROBLEM

According to an aspect of the present disclosure, there is provided an IoT light switch module that enables remote control of lighting without being supplied with power at all times and embedding batteries.

The aspects of the present disclosure are not limited to the above-mentioned aspects, and other aspects, which are not mentioned, will be clearly understood by those skilled in the art from the following description.

### SOLUTION TO PROBLEM

An IoT light switch module according to an embodiment of the present disclosure is connected between (i) an active line and (ii) another power terminal of lighting of which one power terminal is connected to a neutral line, and includes a relay switch connected between the active line and the another power terminal of the lighting, a controller configured to wirelessly communicate with a user device and control on and off of the relay switch according to a control command from the user device, a first regulator connected between the active line and a power input terminal of the controller to receive a normal current from the active line when the relay switch is turned on and supply the normal current to the controller, an AC-DC converter connected between the another power terminal of the lighting and the power input terminal of the controller to receive a leakage current from the another power terminal of the lighting when the relay switch is turned off, convert the leakage current into AC-DC, and supply the same to the controller, a super capacitor connected to the active line to receive the normal current from the active line when the relay switch is turned on and connected to a power output terminal of the AC-DC converter to receive the AC-DC converted leakage current from the AC-DC converter when the relay switch is turned off, and a capacitor switch connected between the super capacitor and the power input terminal of the controller, wherein the controller controls the capacitor switch so that the capacitor switch is turned on when switching from a sleep mode to an active mode, so that the controller receives the current required for switching from the super capacitor to the active mode, and in the active mode, the relay switch is controlled on and off according to a control command from the user device.

Other specific details of the present disclosure are included in the detailed description and drawings.

### ADVANTAGEOUS EFFECTS OF INVENTION

According to the present disclosure as described above, the super capacitor receives a normal current from the active line when the relay switch is turned on, and when the relay switch is turned off, a leakage current is supplied from the lighting to store it. When a controller is switched to an active mode that requires a large amount of current consumption, a current can be supplied from the super capacitor, and the controller can receive a leakage current from the lighting even when the relay switch is turned off, so that the neutral line is directly connected. Therefore, it is possible to provide an IoT light switch module that enables remote control of lighting without being supplied with power at all times, and also, without using battery power by embedding a large-capacity battery.

The effects of the present disclosure are not limited to the above-mentioned effects, and other effects, which are not mentioned, will be clearly understood by those skilled in the art from the following description.

### BRIEF DESCRIPTION OF DRAWINGS

FIG. 1 is a conceptual diagram schematically illustrating an example of an application environment of an IoT light switch module according to an embodiment of the present disclosure.
FIG. 2 is a circuit diagram schematically illustrating the configuration of an IoT light switch module according to an embodiment of the present disclosure.
FIG. 3 is a circuit diagram schematically illustrating switch control and current flow of the IoT light switch module of FIG. 2 when converted into an active mode.
FIG. 4 is a circuit diagram schematically illustrating switch control and current flow of the IoT light switch module of FIG. 2 in a turn-on state of lighting.
FIG. 5 is a circuit diagram schematically illustrating switch control and current flow of the IoT light switch module of FIG. 2 in a turn-off state of lighting.
FIG. 6 is a circuit diagram schematically illustrating switch control and current flow of the IoT light switch module of FIG. 2 when converted into a sleep mode.
FIG. 7 is a graph illustrating a relationship between current consumption of the controller of FIG. 2 and an operation mode and an on/off state of a second switch.
FIG. 8 is a flowchart schematically illustrating a method of controlling the IoT light switch module of FIG. 2.
FIG. 9 is a conceptual diagram schematically illustrating another example of an application environment of an IoT light switch module according to an embodiment of the present disclosure.

### MODE(S) FOR CARRYING OUT THE INVENTION

Advantages and features of the present disclosure and methods for achieving them will be apparent from the embodiments described below in detail in conjunction with the accompanying drawings. However, the present disclosure is not limited to the embodiments disclosed below, but may be implemented in various different forms. The embodiments are provided so that this disclosure will be thorough and complete and will fully convey the scope of the present disclosure to those skilled in the technical field to which the present disclosure pertains. It is to be noted that the scope of the present disclosure is defined only by the claims.

The terminology used herein is for the purpose of describing embodiments and is not intended to limit the present disclosure. As used herein, the singular may be intended to include the plural forms as well, unless the context clearly indicates otherwise. The terms "comprises" and/or "comprising" used herein do not preclude the presence or addition of one or more other components, in addition to the mentioned components. Like reference numerals designate like components throughout the specification. As used herein, the term "and/or" includes each and all combinations of one or more of the mentioned components. It will be understood that, although the terms "first", "second", etc., may be used herein to describe various components, these components should not be limited by these terms. These terms are only used to distinguish one component from another component. Accordingly, a first component mentioned below could be termed a second component without departing from the technical ideas of the present disclosure.

Unless otherwise defined, all terms (including technical and scientific terms) used herein have the same meaning as commonly understood by those skilled in the technical field to which the present disclosure pertains. It will be further understood that terms, such as those defined in commonly used dictionaries, should not be interpreted in an idealized or overly formal sense unless expressly so defined herein.

Spatially relative terms, such as "below," "beneath," "lower," "above," "upper," and the like, may be used for ease of description to describe a relationship between one component and another components as illustrated in the drawings. Spatially relative terms may be intended to encompass different orientations of the components in use or operation in addition to the orientation illustrated in the drawings. For example, if the component illustrated in the drawings is turned over, components described as "below" or "beneath" other components would then be oriented "above" the other components. Accordingly, the example term "below" can encompass both an orientation of above and below. The component may also be oriented in a different orientation, and accordingly, the spatially relative terms may be interpreted according to the orientation.

The active line means a line through which an AC voltage is supplied and current flows in, and the neutral line means a line with an ideal voltage of zero and through which current flows out. The active line is also called a heart line. The normal current represents the normal current supplied from the active line, and is used to distinguish it from a leakage current.

Sleep mode is a low-power mode or a power-saving mode, which indicates a state in which, for example, a wireless communication module is disabled or performs only a minimized function or operation (for example, reception of a wake-up signal), and the active mode is used as a concept that contrasts with the sleep mode.

Hereinafter, embodiments of the present disclosure will be described in detail with reference to the accompanying drawings.

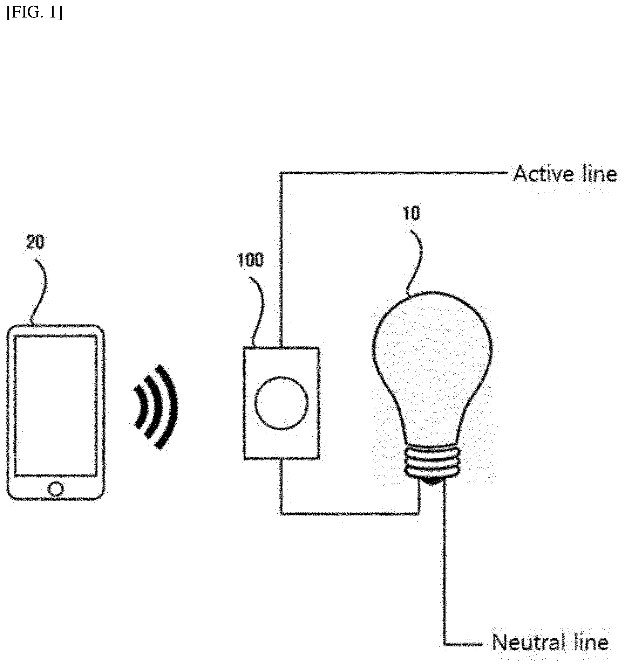

FIG. 1 is a conceptual diagram schematically illustrating an example of an application environment of an IoT light switch module according to an embodiment of the present disclosure.

Referring to FIG. 1, the IoT light switch module 100 according to an embodiment of the present disclosure may be provided in the form of a switch exposed to the outside or buried in a wall or an internal configuration of a switch box.

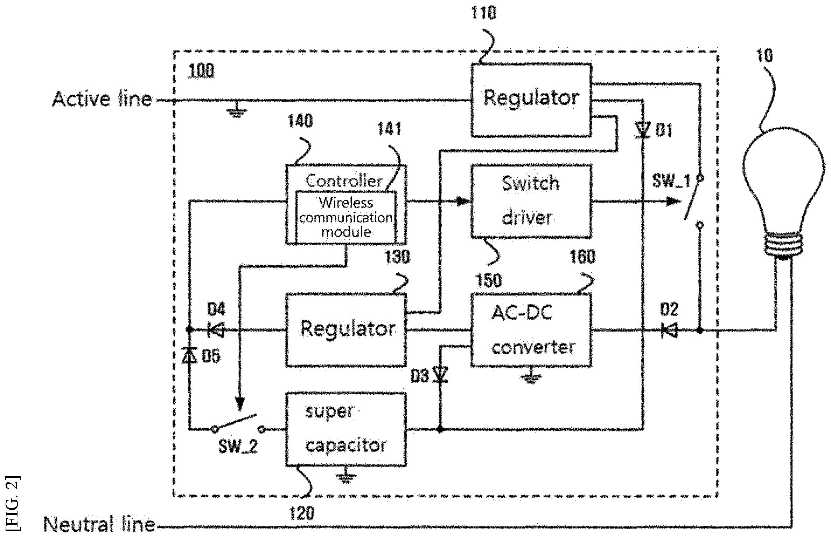

The IoT light switch module 100 is connected between an active line and another power terminal of the lighting 10 in which one power terminal is connected to a neutral line. The neutral line is not directly connected to the IoT light switch module 100. Accordingly, the IoT light switch module 100 is not always supplied with power. In addition, as will be described later with reference to FIG. 2, the IoT light switch module 100 does not embed a large-capacity battery.

The IoT light switch module 100 communicates wirelessly with the user device 20. For example, the user device 20 may include one or more of a telecommunication device such as a smart phone, a tablet, a PDA, and a laptop, and a remote controller, but is not limited thereto. For example, wireless communication may include one or more of communication of Wi-Fi, Li-Fi, Bluetooth, UWB (Ultra Wide Band), Zigbee, and Z-wave type, but is not limited thereto. The IoT light switch module 100 may be connected to a gateway device through wireless communication and may be connected to the user device 20 through the Internet.

FIG. 2 is a circuit diagram schematically illustrating the configuration of an IoT light switch module according to an embodiment of the present disclosure.

Referring to FIG. 2, the IoT light switch module 100 according to an embodiment of the present disclosure includes a first regulator 110, a super capacitor 120, a second regulator 130, a controller 140, a switch driver 150, an AC-DC converter 160, a first switch SW_1, a second switch SW_2, and first to fifth diodes D1 to D5.

The first regulator 110 is disposed between the active line and the first switch SW_1, between the active line and the super capacitor 120, and between the active line and the second regulator 120. For example, the first regulator is to keep the output voltage constant and to stabilize the amount of output current.

The first switch SW_1 is connected to the active line through the first regulator 110. The first switch SW_1 is connected between the active line and another power terminal of the lighting 10. For example, the first switch SW_1 may be a relay switch, but is not limited thereto.

The controller 140 communicates wirelessly with the user device 20. To this end, the controller 140 includes a wireless communication module 141. As described above, the wireless communication module 141 may communicate wirelessly with the user device 20 using one or more of communication of Wi-Fi, Li-Fi, Bluetooth, UWB (Ultra Wide Band), Zigbee, and Z-wave type. For example, a microcontroller unit (MCU) may be used as the controller 140, but is not limited thereto. The controller 140 controls on and off of the first switch SW_1 according to a control command from the user device 20.

A switch driver 150 is provided to control the switch on and off. The controller 140 transmits an on/off control command of the first switch SW_1 to the switch driver 150, and the switch driver 150 directly controls on and off of the first switch SW_1 according to a control command from the controller 140. For example, the switch driver 150 may be a relay driver, but is not limited thereto.

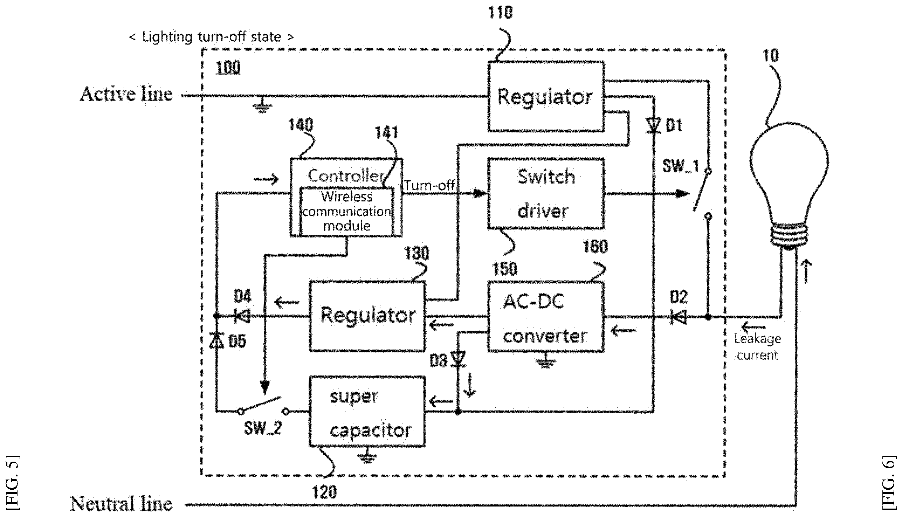

The AC-DC converter 160 is connected between the first switch SW_1 and the power input terminal of the controller 140, and between the another power terminal of the lighting 10 and the power input terminal of the controller 140. Accordingly, as will be described later with reference to FIG. 5, the AC-DC converter 160 receives a leakage current from the another power terminal of the lighting 10 when the first switch SW_1 is turned off, and converts the leakage current into AC-DC and supplies the same to the controller 140. When the first switch SW_1 is turned on, the AC-DC converter 160 does not receive a normal current from the first regulator 110 due to excessive current consumption of the lighting 10, which is load, or may be supplied only with very small amounts of current.

The second regulator 130 is disposed between the first regulator 110 and the power input terminal of the controller 140 and between the AC-DC converter 160 and the power input terminal of the controller 140. For example, the second regulator 130 may be a low dropout (LDO) regulator for providing a constant output voltage even at a low input voltage. For example, the second regulator 130 may output a voltage of 3.3 V, but is not limited thereto. The output voltage of the second regulator 130 may be variously modified according to exemplary embodiments.

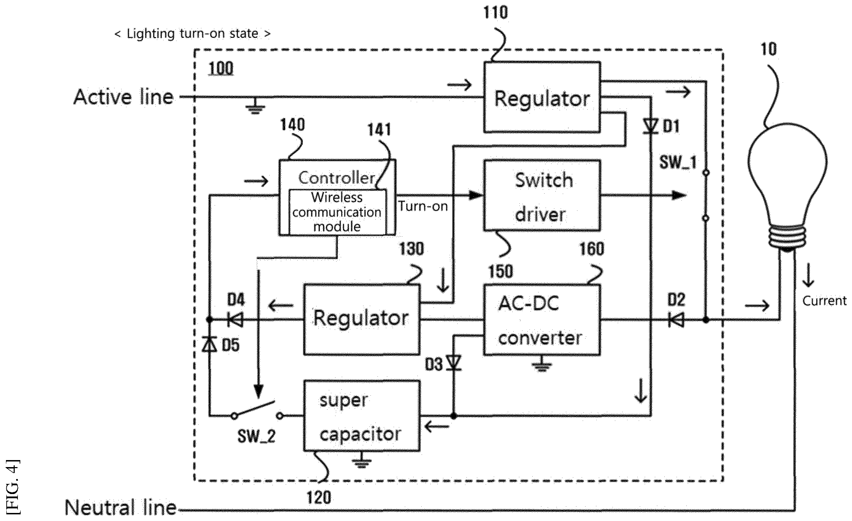

The super capacitor 120 is connected to the active line through the first regulator 110. Accordingly, as will be described later with reference to FIG. 4, the super capacitor 120 receives a normal current from the active line when the first switch SW_1 is turned on.

In addition, the super capacitor 120 is connected to the power output terminal of the AC-DC converter 160. Accordingly, as will be described later with reference to FIG. 5, the super capacitor 120 receives the AC-DC converted leakage current from the AC-DC converter 160 when the first switch SW_1 is turned off.

The super capacitor 120 is an ultra-high capacitance capacitor and may store an active line and a current supplied from the AC-DC converter 160.

The second switch SW_2 is connected between the super capacitor 120 and the power input terminal of the controller 140. When the second switch SW_2 is turned on, the current stored in the super capacitor 120 may be supplied to the controller 140, so the second switch SW_2 may be referred to as a capacitor switch.

The controller 140 may control on and off of the second switch SW_2 according to an operation mode. The controller 140 may control the second switch SW_2 to be turned on when switching from a sleep mode to an active mode. In addition, the controller 140 may control the second switch SW_2 to be turned off when switching from the active mode to the sleep mode.

Operation modes including a sleep mode and an active mode may relate to the wireless communication module 141. The sleep mode may represent a state in which the wireless communication module 141 is disabled or performs only a minimized function or operation (reception of a wake-up signal) compared to the active mode, but is not limited thereto.

The first diode D1 is connected between the active line and the super capacitor 120. The second diode D2 is connected between the first switch SW_1 and the power input terminal of the AC-DC converter 160 or between the another power terminal of the lighting 10 and the power input terminal of the AC-DC converter 160. The third diode D3 is disposed between the power output terminal of the AC-DC converter 160 and the super capacitor 120. The fourth diode D4 is disposed between the power output terminal of the AC-DC converter 160 and the power input terminal of the controller 140. More specifically, the fourth diode D4 is disposed between the power output terminal of the second regulator 130 and the power input terminal of the controller 140. The fifth diode D5 is disposed between the super capacitor 120 and the power input terminal of the controller 140. The first to fifth diodes D1 to D5 are used for purposes of rectifying current, maintaining a predetermined voltage, and maintaining a predetermined current.

Although not clearly illustrated, the IoT light switch module 100 according to an embodiment of the present disclosure may further include any component not illustrated in FIG. 2.

Hereinafter, switch control and current flow when switching the operation mode of the IoT light switch module 100 according to an embodiment of the present disclosure having the above components or when controlling the on/off of the lighting will be described.

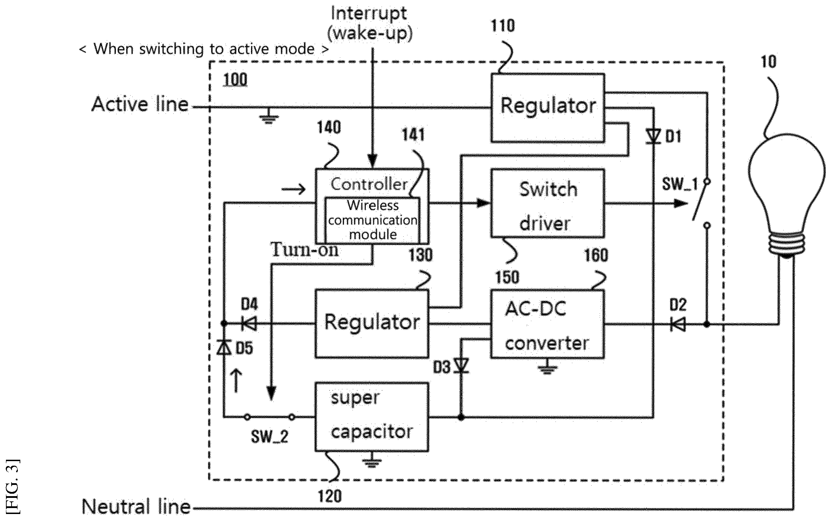

FIG. 3 is a circuit diagram schematically illustrating switch control and current flow of the IoT light switch module of FIG. 2 when converted into an active mode.

Referring to FIG. 3, as described above, the IoT light switch module 100 controls the turn-on of the second switch SW_2 when switching from the sleep mode to the active mode. Accordingly, the controller 140 may receive a current required for switching to the active mode from the super capacitor 120. As will be described later, when the controller 140 switches from the sleep mode to the active mode, the amount of current consumption increases relatively rapidly. In response to this, the controller 140 may deal with the consumption of a large amount of current by using the current stored in the super capacitor 120 rather than from the second regulator 130.

Due to a potential difference between the super capacitor 120 and the second regulator 130, that is, because the voltage taken across the super capacitor 120 is relatively high, the second regulator 130 cannot supply current to the controller 140.

The IoT light switch module 100 may switch an operation mode from a sleep mode to an active mode in response to an external interrupt. For example, the interrupt may be reception of a wake-up signal from the user device 20, but is not limited thereto. The wake-up signal means a signal that is predefined for switching from a sleep mode to an active mode, that is, to wake up the sleeping IoT light switch module 100 (controller 140 or wireless communication module 141). The wake-up signal may be predefined in one or more communication protocols among the communications of Wi-Fi, Li-Fi, Bluetooth, UWB (Ultra Wide Band), Zigbee, and Z-wave type.

The IoT light switch module 100 controls on or off a relay switch according to a control command from the user device 20 in an active mode to control on or off the lighting 10.

FIG. 4 is a circuit diagram schematically illustrating switch control and current flow of the IoT light switch module of FIG. 2 in a turn-on state of lighting.

Referring to FIG. 4, the controller 140 of the awakened IoT light switch module 100 transmits a turn-on control command to the switch driver 150, and the switch driver 150 controls the turn-on of the first switch SW_1. The current flow in this state is illustrated in FIG. 4.

The normal current output by the first regulator 110 is supplied to the first switch SW_1, the super capacitor 120, and the second regulator 130. The normal current passing through the first switch SW_1 is (mostly) supplied to the lighting 10. Then, the normal current output by the second regulator 130 is supplied to the controller 140.

FIG. 5 is a circuit diagram schematically illustrating switch control and current flow of the IoT light switch module of FIG. 2 in a turn-off state of lighting.

Referring to FIG. 5, the controller 140 of the awakened IoT light switch module 100 transmits a turn-off control command to the switch driver 150, and the switch driver 150 controls the turn-off of the first switch SW_1. Control. The current flow in this state is illustrated in FIG. 5.

A leakage current from the lighting 10 is supplied to the AC-DC converter 160. The AC-DC converted leakage current output by the AC-DC converter 160 is supplied to the second regulator 130 and the super capacitor 120.

Then, the normal current output by the second regulator 130 is supplied to the controller 140. Accordingly, the controller 140 may receive current even in a state where the first switch SW_1 is turned off and the lighting 10 is turned off.

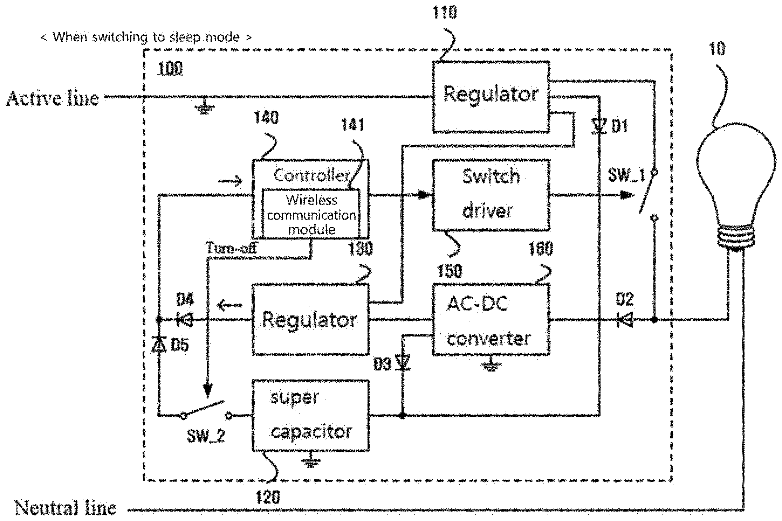

FIG. 6 is a circuit diagram schematically illustrating switch control and current flow of the IoT light switch module of FIG. 2 when converted into a sleep mode.

Referring to FIG. 6, as described above, when the IoT light switch module 100 switches from an active mode to a sleep mode, it controls the turn-off of the second switch SW_2. Accordingly, current supply from the super capacitor 120 to the controller 140 is cut off. In this case, the controller 140 may receive current from the second regulator 130. As will be described later, the controller 140 relatively reduces the amount of current consumption while operating in the sleep mode.

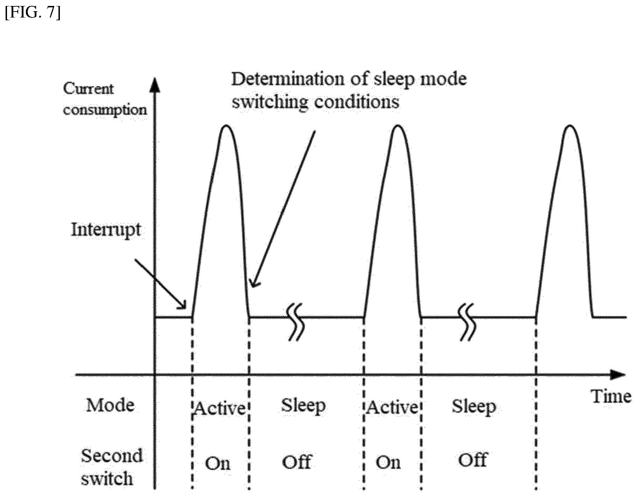

FIG. 7 is a graph illustrating a relationship between current consumption of the controller of FIG. 2 and an operation mode and an on/off state of a second switch.

Referring to FIG. 7, the IoT light switch module 100 may switch the operation mode from the sleep mode to the active mode in response to an interrupt such as reception of a wake-up signal from the user device 20 while waiting in the sleep mode. In addition, the IoT light switch module 100 may determine that the operation mode switching condition has been satisfied when there is no operation for a predetermined period of time while operating in the active mode, and may switch the operation mode from the active mode to the sleep mode.

The controller 140 of the IoT light switch module 100 consumes a relatively large amount of current in the active mode and a relatively small amount of current in the sleep mode. In particular, when switching from the sleep mode to the active mode, the amount of current consumption of the controller 140 increases rapidly. Accordingly, at this time, the current supplied from the second regulator 130 is insufficient, and the controller 140 controls the turn-on of the second switch SW_2 to receive the current required for switching from the super capacitor 120 to the active mode.

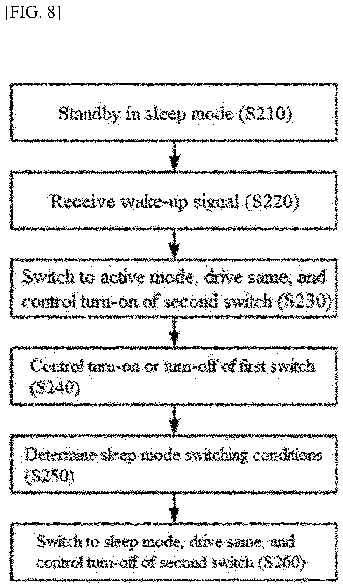

FIG. 8 is a flowchart schematically illustrating a method of controlling the IoT light switch module of FIG. 2.

Referring to FIG. 8, in step S210, the controller 140 waits in a sleep mode.

Subsequently, in step S220, the controller 140, more specifically, the wireless communication module 141 of the controller 140 wirelessly communicates with the user device 20, and receives a wake-up signal from the user device 20 do. The wake-up signal may be received from the user device 20 along with or before a control command for controlling the lighting 10.

Subsequently, in step S230, the controller 140 switches the operation mode from the sleep mode to the active mode and drives it, and controls the turn-on of the second switch SW_2. Accordingly, as described above, the controller 140 receives current from the super capacitor 120.

Subsequently, in step S240, the controller 140 (receives a control command from the user device 20) controls the turn-on or turn-off of the first switch SW_1 according to the control command from the user device 20.

Subsequently, in step S250, the controller 140 determines a condition for switching the operation mode from the active mode to the sleep mode. For example, when there is no operation for a predetermined period of time, that is, when a control command is not received from the user device 20, the controller 140 may determine that the condition is satisfied, but is limited thereto.

Subsequently, in step S260, when the condition is satisfied, the controller 140 switches the operation mode from the active mode to the sleep mode and drives it, and controls the turn-off of the second switch SW_2. Accordingly, as described above, the supply of current from the super capacitor 120 to the controller 140 is blocked.

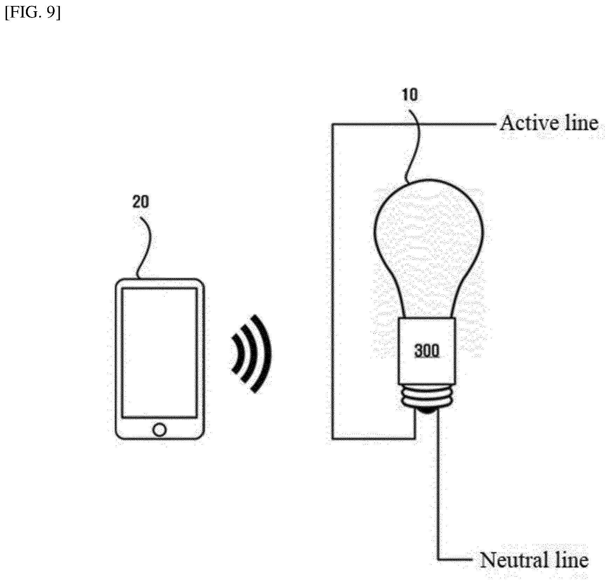

FIG. 9 is a conceptual diagram schematically illustrating another example of an application environment of an IoT light switch module according to an embodiment of the present disclosure.

Referring to FIG. 9, the IoT light switch module 300 according to an embodiment of the present disclosure may be provided in a socket type for lighting or an internal configuration of the socket.

According to the present disclosure as described above, the super capacitor receives a normal current from the active line when the relay switch is turned on, and when the relay switch is turned off, a leakage current is supplied from the lighting to store it. When a controller is switched to an active mode that requires a large amount of current consumption, a current can be supplied from the super capacitor, and the controller can receive a leakage current from the lighting even when the relay switch is turned off, so that the neutral line is directly connected. Therefore, it is possible to provide an IoT light switch module that enables remote control of lighting without being supplied with power at all times, and also, without using battery power by embedding a large-capacity battery.

The steps of a method or algorithm described in connection with the embodiments of the present disclosure may be embodied directly in hardware, in a software module executed by hardware, or in a combination thereof. The software module may reside on a Random Access Memory (RAM), a Read Only Memory (ROM), an Erasable Programmable ROM (EPROM), an Electrically Erasable Programmable ROM (EEPROM), a Flash memory, a hard disk, a removable disk, a CD-ROM, or a computer readable recording medium in any form well known in the technical field to which the present disclosure pertains.

Although the embodiments of the present disclosure have been described with reference to the attached drawings, those skilled in the technical field to which the present disclosure pertains will understand that the present disclosure may be practiced in other detailed forms without departing from the technical spirit or essential features of the present disclosure. Therefore, it should be understood that the above-described embodiments are exemplary in all aspects rather than being restrictive.

## Claims

1. An IoT light switch module connected between (i) an active line and (ii) another power terminal of lighting of which one power terminal is connected to a neutral line, the IoT light switch module comprising:
a relay switch connected between the active line and the another power terminal of the lighting;
a controller configured to wirelessly communicate with a user device and control on and off of the relay switch according to a control command from the user device;
a first regulator connected between the active line and a power input terminal of the controller to receive a normal current from the active line when the relay switch is turned on and supply the normal current to the controller;
an AC-DC converter connected between the another power terminal of the lighting and the power input terminal of the controller to receive a leakage current from the another power terminal of the lighting when the relay switch is turned off, convert the leakage current into AC-DC, and supply it to the controller;
a super capacitor connected to the active line to receive the normal current from the active line when the relay switch is turned on and connected to a power output terminal of the AC-DC converter to receive the AC-DC converted leakage current from the AC-DC converter when the relay switch is turned off; and
a capacitor switch connected between the super capacitor and the power input terminal of the controller,
wherein the controller controls the capacitor switch so that the capacitor switch is turned on when switching from a sleep mode to an active mode, so that the controller receives the current required for switching from the super capacitor to the active mode, and in the active mode, the relay switch is controlled on and off according to a control command from the user device.

2. The IoT light switch module of claim 1, wherein the controller switches from the sleep mode to the active mode in response to receiving a wake-up signal from the user device, and controls the capacitor switch to turn on the capacitor switch.

3. The IoT light switch module of claim 1, wherein the controller controls the capacitor switch to turn off the capacitor switch when switching from the active mode to the sleep mode.

4. The IoT light switch module of claim 1, wherein the controller comprises a wireless communication module, and wherein the sleep mode and the active mode are related to an operation mode of the wireless communication module.

5. The IoT light switch module of claim 4, wherein the wireless communication comprises one or more of communication of Wi-Fi, Li-Fi, Bluetooth, UWB (Ultra Wide Band), Zigbee and Z-wave type.

6. The IoT light switch module of claim 1, further comprising a first diode disposed between the active line and the super capacitor.

7. The IoT light switch module of claim 1, further comprising a second diode disposed between the relay switch and the power input terminal of the AC-DC converter and between the another power terminal of the lighting and the power input terminal of the AC-DC converter.

8. The IoT light switch module of claim 1, further comprising a third diode disposed between the power output terminal of the AC-DC converter and the super capacitor.

9. The IoT light switch module of claim 1, further comprising a fourth diode disposed between the power output terminal of the AC-DC converter and the power input terminal of the controller.

10. The IoT light switch module of claim 1, further comprising a fifth diode disposed between the super capacitor and the power input terminal of the controller.

11. The IoT light switch module of claim 1, further comprising a second regulator disposed between the active line and the relay switch, between the active line and the super capacitor, and between the active line and the first regulator.

12. The IoT light switch module of claim 1, wherein the IoT light switch module is provided in a socket type for lighting,
